# EUROPEAN PATENT APPLICATION

(11) **EP 2 400 686 A2**
(43) Date of publication of application: **28.12.2011**
(21) Application number: 11005202.4
(22) Date of filing: 27.06.2011
(51) Int. Cl.: H04L 5/00

(54) **Method of handling downlink control information indication and related communication device**

(30) Priority: 25.06.2010 US 358644 P
(71) Applicant: HTC Corporation, Taoyuan County 330 (TW)
(72) Inventor: Jen, Yu-Chih, Taoyuan City Taoyuan County 330 (TW)
(74) Representative: Klang, Alexander H.

(57) **Abstract**

A method of acquiring control format indicator information on a physical control format indicator channel transmitted by a network of a wireless communication system for a mobile device in the wireless communication system is disclosed. The method comprises locating the PCFICH of a downlink component carrier of a cell in the wireless communication system according to at least one of a cell-specific frequency offset, a mobile device-specific offset, a component carrier-specific offset and an additional cell-specific offset.

## Description

### Background of the Invention

### 1. Field of the Invention

The present invention relates to a method used in a wireless communication system and related communication device, and more particularly, to a method of handling downlink control information indication in a wireless communication system and related communication device.

### 2. Description of the Prior Art

A long-term evolution (LTE) system, initiated by the third generation partnership project (3GPP), is now being regarded as a new radio interface and radio network architecture that provides a high data rate, low latency, packet optimization, and improved system capacity and coverage. In the LTE system, a radio access network known as an evolved universal terrestrial radio access network (E-UTRAN) includes a plurality of evolved Node-Bs (eNBs) for communicating with a plurality of user equipments (UEs) and communicates with a core network including a mobility management entity (MME) , serving gateway, etc for NAS (Non Access Stratum) control.

UL control information in the LTE system includes an acknowledgement/negative acknowledgement (ACK/NACK) for downlink (DL) data, a channel quality indicator (CQI), a scheduling request (SR) and multiple-input multiple-output (MIMO) parameters of the UE. The UE may transmit the UL control information by using a dedicated resource. In this situation, the UE transmits the UL control information to an eNB on a physical uplink (UL) control channel (PUCCH) in the LTE system. Resource blocks allocated to the PUCCH in a subframe, i.e., a PUCCH region, locate on edges of a system bandwidth for a low out of band (OOB) emission and a low constraint on UL data scheduling. Besides, the resource blocks hop within slots (intra-subframe hopping) or between slots (inter-subframe hopping) for gaining frequency diversity. On the other hand, the UE may also transmit the UL control information along with data. In this situation, the UE first multiplexes the UL control information and the data, and then transmits the multiplexed result to the eNB on a physical UL shared channel (PUSCH) in the LTE system. Please note that, the UE can only select the one of the PUCCH and the PUSCH to transmit the UL control information but not both so as to maintain a single carrier property, i.e., a low peak to average power ratio (PAPR).

On the other hand, DL control information in the LTE system includes a control format indicator (CFI), a ACK/NACK and downlink control information (DCI).

The CFI is transmitted on a physical control format indicator channel (PCFICH), and indicates the UE a number of orthogonal frequency division multiplexing (OFDM) symbols in control region used for transmitting the DL control information. In general, the number of OFDM symbols may be 1, 2 or 3, and may vary for each subframe. Besides, for the UE to receive the PCFICH correctly, two methods are used to improve the quality of the PCFICH. First, multiple resource elements (REs) in different subcarriers are used to carry the PCFICH for gaining frequency diversity. Second, a cell-specific frequency offset based on a Physical Cell ID is used to avoid inter-cell interference or confusion generated by PCFICHs transmitted by neighbor cells.

The eNB feedbacks the ACK/NACK on a physical hybrid automatic repeat request (HARQ) indicator channel (PHICH) to the UE to indicate whether the UL control information and the data transmitted on the UL shared data channel are correctly received. Distinct PHICHs can be multiplexed into the same group of REs, i.e., a PHCICH group, and complex orthogonal Walsh sequences are used for separating the distinct PHICHs from each other.

The DCI is transmitted on a physical DL control channel (PDCCH), and indicates both the eNB and the UE information of resource assignments on the UL and the DL, respectively, by using 4 different DCI formats and their variations. In the LTE system, the PDCCH is transmitted by using one or multiple control channel elements (CCEs). A CCE includes 9 resource element groups (REGs), and a REG includes 4 REs. More specifically, there are 4 PDCCH formats, e.g., PDCCH formats 0, 1, 2 and 3, and these PDCCH formats occupy 1, 2, 4 and 8 CCEs, respectively. The 4 DCI formats with their variations are transmitted on corresponding 4 PDCCH formats. Please note that, concept of REGs is also used in the PCFICH and the PHICH.

In the LTE system, a physical DL shared channel (PDSCH) is the main channel for the eNB to transmit data to the UEs. Besides, the PDSCH can also used for broadcasting system information and transmitting paging to the UEs. Corresponding resources for transmitting the PDSCH are indicated to the UEs in the PDCCH. The PDSCH can be though as the DL counterpart of the PUSCH.

A long term evolution-advanced (LTE-A) system, as its name implies, is an evolution of the LTE system. The LTE-A system targets faster switching between power states, improves performance at the coverage edge of an eNB, and includes subjects, such as bandwidth extension, coordinated multipoint transmission/reception (CoMP), UL multiple-input multiple-output (MIMO), etc.

For bandwidth extension, a carrier aggregation (CA) is introduced to the LTE-A system by which two or more component carriers are aggregated to achieve a wider-band transmission. Accordingly, the LTE-A system can support a wider bandwidth up to 100MHz by aggregating a maximum number of 5 component carriers, where bandwidth of each component carrier is 20MHz and is backward compatible with 3GPP Rel-8. The LTE-A system supports the CA for both continuous and non-continuous component carriers with each component carrier limited to a maximum of 110 resource blocks. The CA increases bandwidth flexibility by aggregating the non-continuous component carriers. A component carrier is either used as a UL component carrier or a DL component carrier, but not both.

When the UE is configured with the CA, the UE is allowed to receive and transmit data on one or multiple component carriers to increase the data rate. In the LTE-A system, it is possible for the eNB to configure the UE different numbers of UL and DL component carriers which depend on UL and DL aggregation capabilities, respectively. Moreover, the component carriers configured to the UE necessarily consists of one DL primary component carrier (PCC) and one UL primary component carrier. Component carriers other than the primary component carriers are named UL or DL secondary component carriers (SCCs). The numbers of UL and DL secondary component carriers are arbitrary, and are related to the UE capability and available radio resources. The UL and DL primary component carriers are used for establishing and re-establishing the radio resource control (RRC), and transmitting and receiving the system information.

When the CA is configured to multiple cells, the multiple cells may operate on different number of DL CCs, each with different bandwidths and different carrier frequencies. Therefore, the cell-specific frequency offset based on the Physical Cell ID is not sufficient for the UE to avoid the inter-cell interference or the confusion generated by the PCFICHs transmitted the neighbor cells. To improve reception of the PCFICH, new mechanism is desired. On the other hand, it may not be necessary to carry any control information including the PDCCH and the PHICH for some DL component carriers due to cross-carrier scheduling. Accordingly, how to indicate the control information on other DL component carriers is needed to be discussed.

Besides, the eNB may transmit multiple PHICHs for multiple PUSCHs on a DL component carrier on which the eNB transmits a UL grant for each of the multiple PUSCHs due to the cross-carrier scheduling configured by the CA. Collision of the multiple PHICHs may happen since resource (e.g. PHICH group and PHICH sequence) allocated to the PHICH in the LTE system is not sufficient to accommodate the multiple PHICHs. Further, the PHICH cannot be extended to the PDSCH transmission region in the LTE-A system since R-PDCCH is used for a relay. Therefore, prevent the multiple PHICHs from collision is a topic for discussion.

### Summary of the Invention

The present invention therefore provides a method and related communication device for handling downlink control information indication to solve the abovementioned problems.

A method of acquiring control format indicator (CFI) information on a physical control format indicator channel (PCFICH) transmitted by a network of a wireless communication system for a mobile device in the wireless communication system is disclosed. The method comprises locating the PCFICH of a downlink (DL) component carrier of a cell in the wireless communication system according to at least one of a cell-specific frequency offset, a mobile device-specific offset, a component carrier-specific offset and an additional cell-specific offset.

A method of determining a control format indicator (CFI) value for a mobile device in a wireless communication system is disclosed. The method comprises determining the CFI value of at least one subframe of a cross-scheduled component carrier according to CFI information indicated by at least one of a dynamic signaling received on a scheduling component carrier and a semi-static configuration, wherein the dynamic signaling and the semi-static configuration are transmitted by a network of the wireless communication system.

A method of indicating a semi-static control format indicator (CFI) value to a mobile device in a wireless communication system for a network of the wireless communication system is disclosed. The method comprises configuring a cross-scheduled component carrier to the mobile device in the wireless communication system by using a carrier aggregation configuration; and sending a semi-static configuration to the mobile device to indicate the semi-static CFI value for both at least one normal subframe and at least one multimedia broadcast single frequency network (MBSFN) subframe of the cross-scheduled component carrier.

A method of indicating a semi-static control format indicator (CFI) value and a dynamic CFI value to a mobile device in a wireless communication for a network of the wireless communication system is disclosed. The method comprises configuring a cross-scheduled component carrier to the mobile device in the wireless communication system by using a carrier aggregation configuration; sending a radio resource control (RRC) signaling to the mobile device to indicate the semi-static CFI value for at least one normal subframe of the cross-scheduled component carrier; and sending a dynamic signaling to the mobile device to indicate the dynamic CFI value for at least one of the at least one normal subframe and at least one multimedia broadcast single frequency network (MBSFN) subframe of the cross-scheduled component carrier.

A method of indicating a carrier indication field (CIF) configuration to a mobile device in a wireless communication for a network of the wireless communication system is disclosed. The method comprises indicating the CIF configuration to the mobile device by transmitting a CIF configuration message, a CIF reconfiguration message, a CIF change signaling or a paging signaling to the mobile device.

A method of handling physical hybrid automatic repeat request (HARQ) indicator channel (PHICH) resource collision in a dynamic uplink (UL) scheduling for a network of a wireless communication system is disclosed. The method comprises at least one of configuring sufficient resources for a plurality of PHICH resources, to feedback a plurality of physical UL shared channel (PUSCH) transmissions transmitted by at least one mobile device in the wireless communication system on a plurality of UL component carriers, and scheduling the at least one mobile device to have a restricted number of a plurality of physical resource blocks (PRBs) allocated to the plurality of PUSCH transmissions on the plurality of UL component carriers or imposing scheduling restriction on the UL PRB allocation by a plurality of PRB indices.

A method of handling physical hybrid automatic repeat request (HARQ) indicator channel (PHICH) resource collision in a semi-persistent scheduling (SPS) for a network of a wireless communication system is disclosed. The method comprises at least one of configuring sufficient resources for a plurality of PHICH resources, to feedback at least one of a plurality of SPS physical uplink (UL) shared channel (PUSCH) transmissions and a plurality of dynamic PUSCH transmissions transmitted by at least one mobile device in the wireless communication system on a UL component carrier, and scheduling the at least one mobile device to have a restricted number of a plurality of physical resource blocks (PRBs) allocated to the plurality of PUSCH transmissions on the plurality of UL component carriers or imposing scheduling restriction on the UL PRB allocation by a plurality of PRB indices.

A method of handling a downlink (DL) hybrid automatic repeat request (HARQ) feedback for a network of a wireless communication system is disclosed. The method comprises receiving a UL transmission from a relay node of the wireless communication system; and transmitting the DL HARQ feedback corresponding to the UL transmission to the relay node on a control channel in a first slot or a second slot of a subframe.

These and other objectives of the present invention will no doubt become obvious to those of ordinary skill in the art after reading the following detailed description of the preferred embodiment that is illustrated in the various figures and drawings.

### Brief Description of the Drawings

Fig. 1 is a schematic diagram of an exemplary wireless communication system according to the present disclosure.

Fig. 2 is a schematic diagram of an exemplary communication device according to the present disclosure.

Fig. 3 is a schematic diagram of communication protocol layers for an exemplary wireless communication system.

Fig. 4 is a flowchart of an exemplary process according to the present disclosure.

Fig. 5 is a flowchart of an exemplary process according to the present disclosure.

Fig. 6 is a flowchart of an exemplary process according to the present disclosure.

Fig. 7 is a flowchart of an exemplary process according to the present disclosure.

Fig. 8 is a flowchart of an exemplary process according to the present disclosure.

Fig. 9 is a flowchart of an exemplary process according to the present disclosure.

Fig. 10 is a flowchart of an exemplary process according to the present disclosure.

Fig. 11 is a flowchart of an exemplary process according to the present disclosure.

### Detailed Description

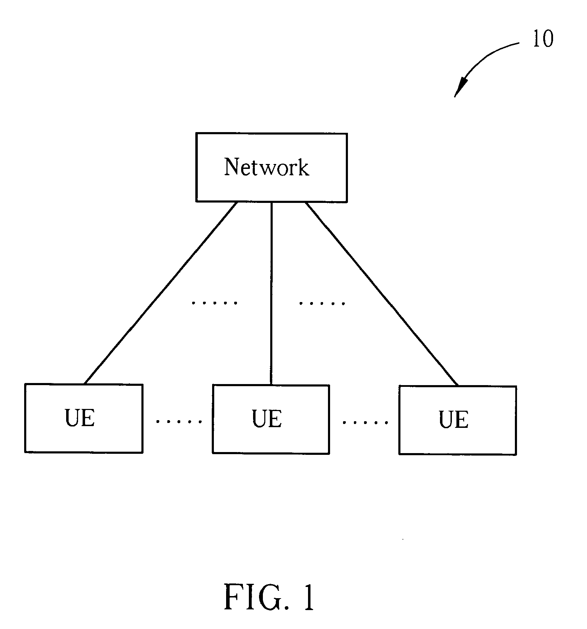

Please refer to Fig. 1, which is a schematic diagram of a wireless communication system 10 according to an example of the present invention. The wireless communication system 10, such as a long term evolution-advanced (LTE-A) system or other mobile communication systems supporting a carrier aggregation (CA), is briefly composed of a network and a plurality of user equipments (UEs). In Fig. 1, the network and the UEs are simply utilized for illustrating the structure of the wireless communication system 10. Practically, the network can be referred as to an E-UTRAN (evolved-UTAN) comprising a plurality of evolved Node-Bs (eNBs) and relays in the LTE-A system. The UEs can be mobile devices such as mobile phones, laptops, tablet computers, electronic books, and portable computer systems. Besides, the network and a UE can be seen as a transmitter or a receiver according to transmission direction, e.g., for an uplink (UL), the UE is the transmitter and the network is the receiver, and for a downlink (DL) , the network is the transmitter and the UE is the receiver.

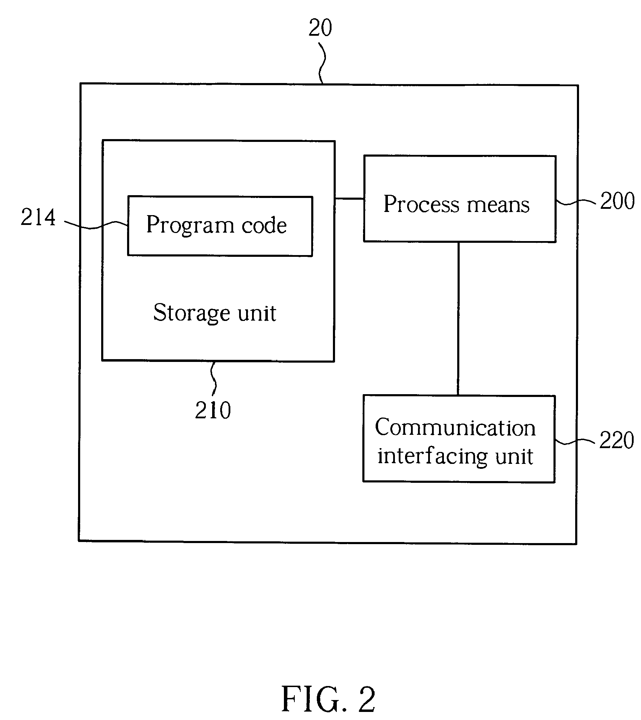

Please refer to Fig. 2, which is a schematic diagram of a communication device 20 according to an example of the present invention. The communication device 20 can be the UE or the network shown in Fig. 1, but is not limited herein. The communication device 20 may include a processor 200 such as a microprocessor or an Application Specific Integrated Circuit (ASIC), a storage unit 210 and a communication interfacing unit 220. The storage unit 210 may be any data storage device that can store a program code 214, accessed by the processor 200. Examples of the storage unit 210 include but are not limited to a subscriber identity module (SIM), read-only memory (ROM), flash memory, random-access memory (RAM), CD-ROM/DVD-ROM, magnetic tape, hard disk, and optical data storage device. The communication interfacing unit 220 is preferably a radio transceiver and can exchange wireless signals with the network according to processing results of the processor 200.

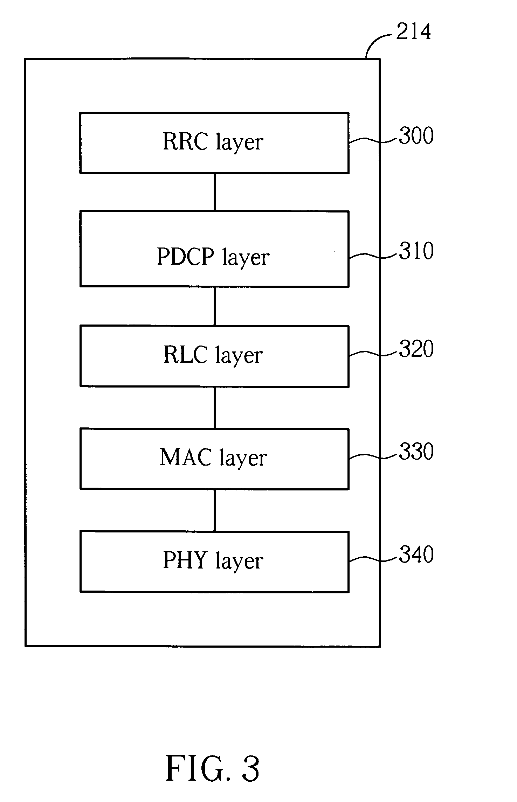

Please refer to Fig. 3, which illustrates a schematic diagram of communication protocol layers for the LTE-Advanced system. The behaviors of some of the protocol layers may be defined in the program code 214 and executed by the processing means 200. The protocol layers from top to bottom are a radio resource control (RRC) layer 300, a packet data convergence protocol (PDCP) layer 310, a radio link control (RLC) layer 320, a medium access control (MAC) layer 330 and a physical (PHY) layer 340. The RRC layer 300 is used for performing broadcast, paging, RRC connection management, measurement reporting and control and radio bearer control responsible for generating or releasing radio bearers. The PHY layer 340 is used to provide physical channels, e.g. a physical UL control channel (PUCCH), a physical DL control channel (PDCCH), a physical UL shared channel (PUSCH), a physical DL shared channel (PDSCH), a physical control format indicator channel (PCFICH) and a physical hybrid automatic repeat request (HARQ) indicator channel (PHICH). The MAC layer 330 is responsible for a HARQ process, multiplexing logical channels, a random access channel (RACH) procedure and maintaining a UL timing alignment. In each HARQ process, an acknowledgement (ACK) is reported to the network if the MAC data/control packet is received and decoded successfully. Otherwise, a negative acknowledgement (NACK) is reported to the network.

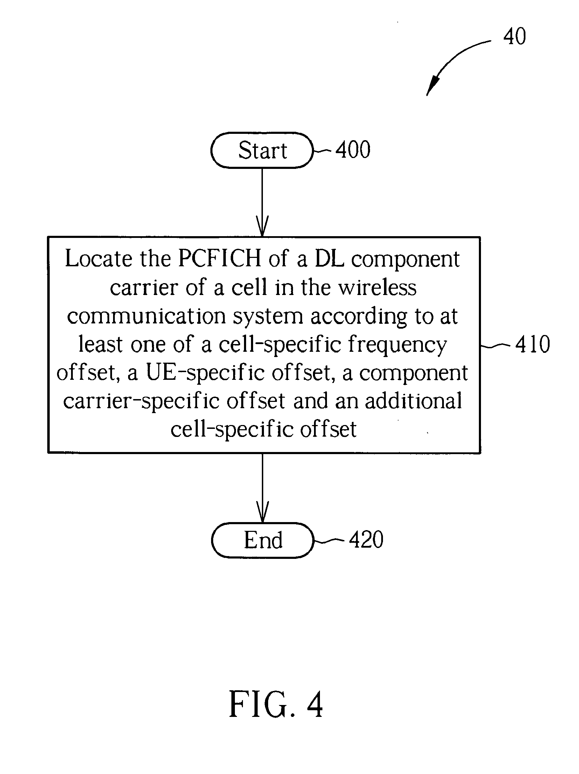

Please refer to Fig. 4, which is a flowchart of a process 40 according to an example of the present disclosure. The process 40 is utilized in a UE in the wireless communication system 10 shown in Fig. 1, to handle control format indicator (CFI) information on a PCFICH transmitted by a network of the wireless communication system 10. The process 40 may be compiled into the program code 214 and includes the following steps:

Step 400: Start.

Step 410: Locate the PCFICH of a DL component carrier of a cell in the wireless communication system according to at least one of a cell-specific frequency offset, a UE-specific offset, a component carrier-specific offset and an additional cell-specific offset.

Step 420: End.

According to the process 40, the UE locates the PCFICH of the DL component carrier of the cell in the wireless communication system according to at least one of the cell-specific frequency offset, the UE-specific offset, the component carrier-specific offset and the additional cell-specific offset. The UE-specific offset may be configured by a network element of the cell by using a RRC signaling or a dynamic signaling. Alternatively, the UE-specific offset may be one of a plurality of offsets configured by the network of the wireless communication system to the UE. More specifically, the UE-specific offset is a bandwidth offset, a hopping offset, a frequency carrier offset or an antenna port offset. The additional cell-specific offset is a bandwidth offset, a hopping offset or a frequency carrier offset. Besides, the UE may decode or descramble the PCFICH according to at least one of a cell-specific sequence and a component carrier-specific sequence, to acquire the CFI information, after locating the PCFICH of the DL component carrier. In addition, the UE is configured with a CA configuration by the network or not.

Therefore, according to the above illustration and the process 40, the UE is able to handle the CFI information on the PCFICH by locating the PCFICH of the DL component carrier of the cell according to at least one of the cell-specific frequency offset, the UE-specific offset, the component carrier-specific offset and the additional cell-specific offset.

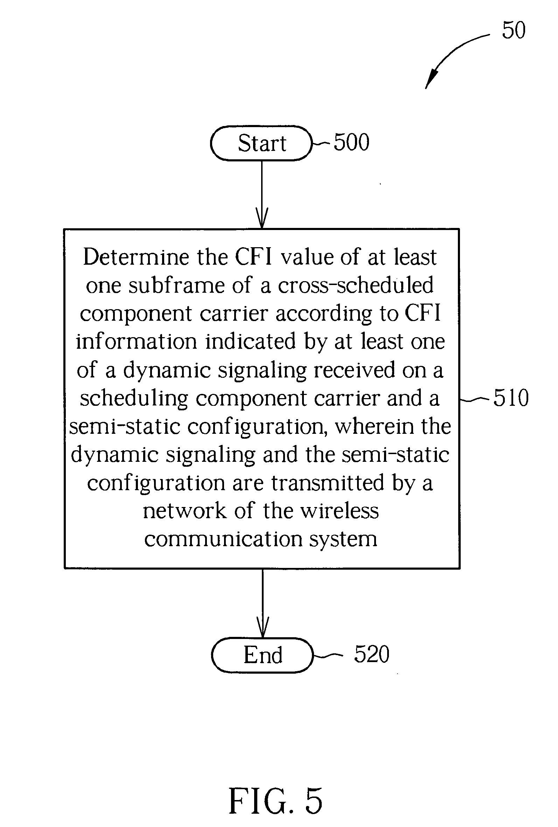

Please refer to Fig. 5, which is a flowchart of a process 50 according to an example of the present disclosure. The process 50 is utilized in a UE in the wireless communication system 10 shown in Fig. 1, to determine a CFI value. The process 50 may be compiled into the program code 214 and includes the following steps:

Step 500: Start.

Step 510: Determine the CFI value of at least one subframe of a cross-scheduled component carrier according to CFI information indicated by at least one of a dynamic signaling received on a scheduling component carrier and a semi-static configuration, wherein the dynamic signaling and the semi-static configuration are transmitted by a network of the wireless communication system.

Step 520: End.

According to the process 50, the UE determines the CFI value of the at least one subframe of the cross-scheduled component carrier according to the CFI information indicated by at least one of the dynamic signaling received on the scheduling component carrier and the semi-static configuration, wherein the dynamic signaling and the semi-static configuration are transmitted by the network of the wireless communication system. Besides, the UE may also determine the CFI value of the at least one subframe of the cross-scheduled component carrier, for determining a number of orthogonal frequency-division multiplexing (OFDM) symbols of a control region of the at least one subframe to receive control information, or for determining a starting position of a PDSCH to receive DL data.

Preferably, the CFI value of the at least one subframe of the cross-scheduled component carrier provided by the semi-static configuration is semi-static. In this situation, the UE can obtain the CFI value through a RRC signaling (e.g. a semi-static configuration) from the network of the wireless communication system. Alternatively, the CFI value of the at least one subframe of the cross-scheduled component carrier provided by the dynamic signaling is dynamic. In this situation, the UE can obtain the CFI value according to at least one of a PCFICH of the scheduling component carrier and the CFI information indicated in a PDCCH of the scheduling component carrier. The CFI value is carried by the PCFICH of the scheduling component carrier, or by the PDCCH (e.g. a field of joint-coded CFI and CIF in the PDCCH) of the scheduling component carrier which schedules the at least one subframe of the cross-scheduled component carrier. Further, the PCFICH corresponds to the PDCCH (e.g. PCFICH and PDCCH are both in a control region of a subframe of the scheduling component carrier), and a carrier indication field (CIF) carried in the PDCCH corresponds to the cross-scheduled component carrier.

Besides, the UE may also determine the CFI value of the at least one subframe of the cross-scheduled component carrier for at least one of a DL detection and a DL reception according to the semi-static configuration, if the UE does not receive the CFI information from the dynamic signaling. Alternatively, the UE may determine the CFI value of the at least one subframe of the cross-scheduled component carrier for at least one of a DL detection and a DL reception according to the dynamic signaling, if the UE receives the CFI information from the dynamic signaling. The cross-scheduled component carrier and the scheduling component carrier of the UE are configured by the network by using a CA configuration.

Therefore, according to the above illustration and the process 50, the UE is able to determine the CFI value by determining the CFI value of the at least one subframe of the cross-scheduled component carrier according to the CFI information indicated by at least one of the dynamic signaling received on the scheduling component carrier and the semi-static configuration, wherein the dynamic signaling and the semi-static configuration are transmitted by the network.

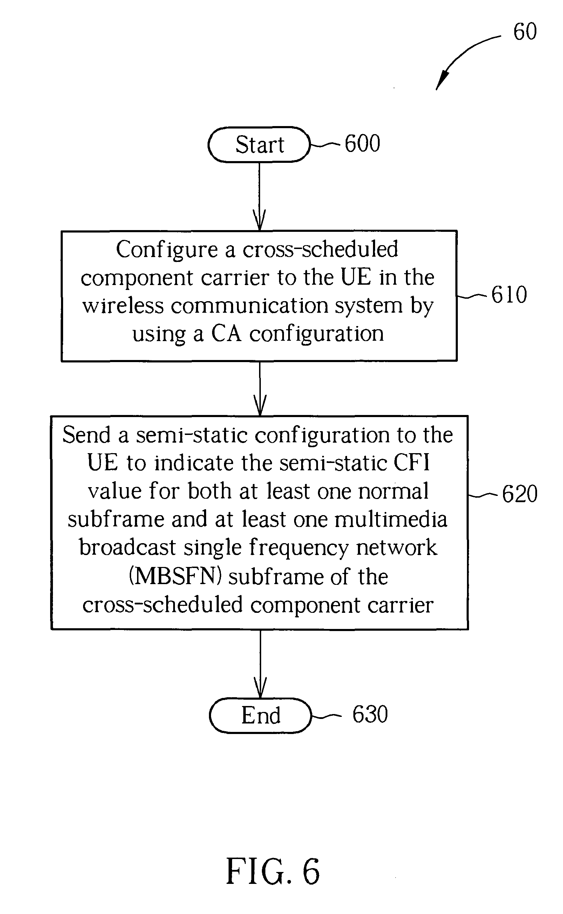

Please refer to Fig. 6, which is a flowchart of a process 60 according to an example of the present disclosure. The process 60 is utilized in a network of the wireless communication system 10 shown in Fig. 1, to indicate a semi-static CFI value to a UE in the wireless communication system 10. The process 60 may be compiled into the program code 214 and includes the following steps:

Step 600: Start.

Step 610: Configure a cross-scheduled component carrier to the UE in the wireless communication system by using a CA configuration.

Step 620: Send a semi-static configuration to the UE to indicate the semi-static CFI value for both at least one normal subframe and at least one multimedia broadcast single frequency network (MBSFN) subframe of the cross-scheduled component carrier.

Step 630: End.

According to the process 60, after configuring the cross-scheduled component carrier to the UE by using the CA configuration (with cross-carrier scheduling) , the network sends the semi-static configuration to the UE to indicate the semi-static CFI value for both the at least one normal subframe and the at least one MBSFN subframe of the cross-scheduled component carrier.

Therefore, according to the above illustration and the process 60, the network is able to indicate the semi-static CFI value to the UE by using the semi-static configuration.

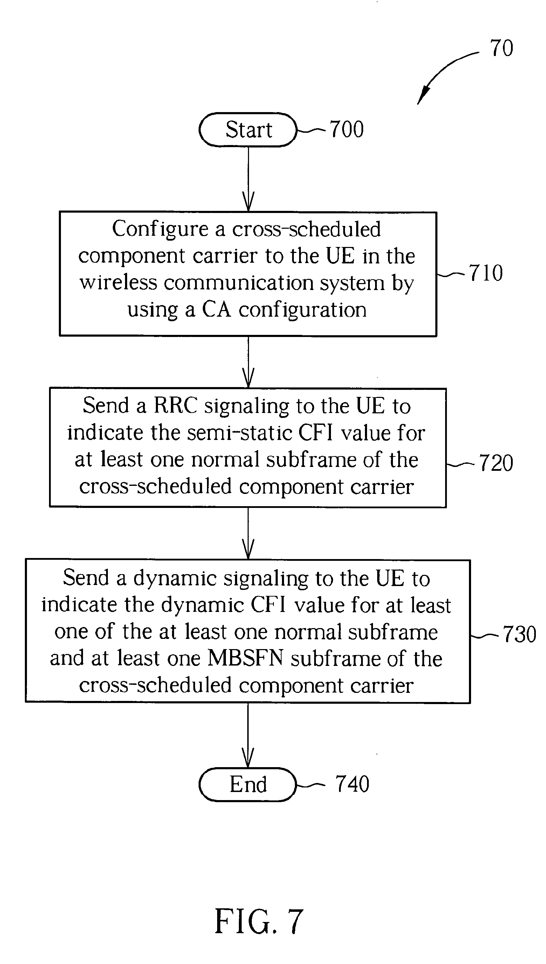

Please refer to Fig. 7, which is a flowchart of a process 70 according to an example of the present disclosure. The process 70 is utilized in a network of the wireless communication system 10 shown in Fig. 1, to indicate a semi-static CFI value and a dynamic CFI value to a UE in the wireless communication system 10. The process 70 may be compiled into the program code 214 and includes the following steps:

Step 700: Start.

Step 710: Configure a cross-scheduled component carrier to the UE in the wireless communication system by using a CA configuration.

Step 720: Send a RRC signaling to the UE to indicate the semi-static CFI value for at least one normal subframe of the cross-scheduled component carrier.

Step 730: Send a dynamic signaling to the UE to indicate the dynamic CFI value for at least one of the at least one normal subframe and at least one MBSFN subframe of the cross-scheduled component carrier.

Step 740: End.

According to the process 70, after configuring the cross-scheduled component carrier to the UE in the wireless communication system by using the CA configuration (with cross-carrier scheduling) , the network sends a RRC signaling to the UE to indicate the semi-static CFI value for at least one normal subframe of the cross-scheduled component carrier, and sends the dynamic signaling (e.g. on a scheduling component carrier) to the UE to indicate the dynamic CFI value for at least one of the at least one normal subframe and the at least one MBSFN subframe of the cross-scheduled component carrier.

Therefore, according to the above illustration and the process 70, the network is able to indicate the semi-static CFI value and the dynamic CFI value to the UE by using the RRC signaling and the dynamic signaling.

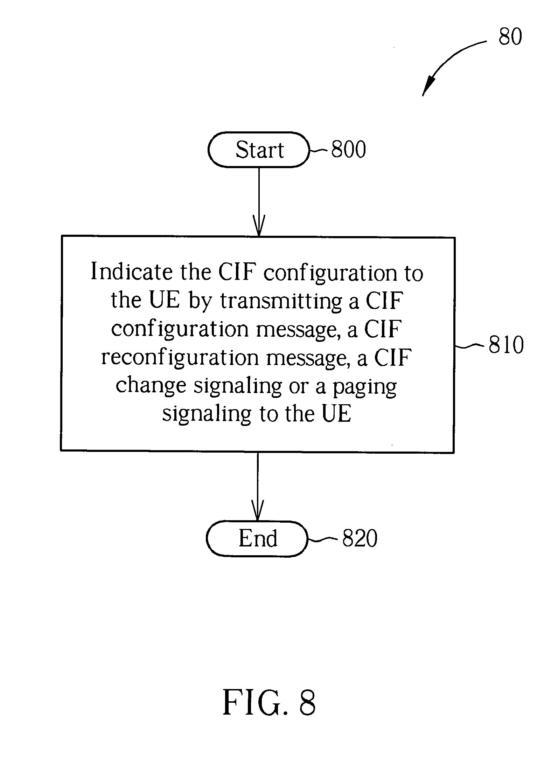

Please refer to Fig. 8, which is a flowchart of a process 80 according to an example of the present disclosure. The process 80 is utilized in a network of the wireless communication system 10 shown in Fig. 1, to indicate a CIF configuration to a UE in the wireless communication system 10. The process 80 may be compiled into the program code 214 and includes the following steps:

Step 800: Start.

Step 810: Indicate the CIF configuration to the UE by transmitting a CIF configuration message, a CIF reconfiguration message, a CIF change signaling or a paging signaling to the UE.

Step 820: End.

According to the process 80, the network indicates the CIF configuration to the UE by transmitting the CIF configuration message, the CIF reconfiguration message the CIF change signaling or the paging signaling to the UE.

Further, the network may also indicate the CIF configuration to the UE by transmitting the CIF configuration message, the CIF reconfiguration message, the CIF change signaling or the paging signaling to the UE, upon or after updating system information of the UE (e.g. the system information update message carries the CIF configuration message or the CIF reconfiguration message). In this situation, the UE receives a CIF reconfiguration, upon or after the system information of the UE is updated by the network. Further, the UE deactivates the CIF configuration, and monitors an UL primary component carrier and a DL primary component carrier.

Therefore, according to the above illustration and the process 80, the network is able to indicate the CIF configuration to the UE by transmitting the CIF configuration message, the CIF reconfiguration message, the CIF change signaling or the paging signaling to the UE.

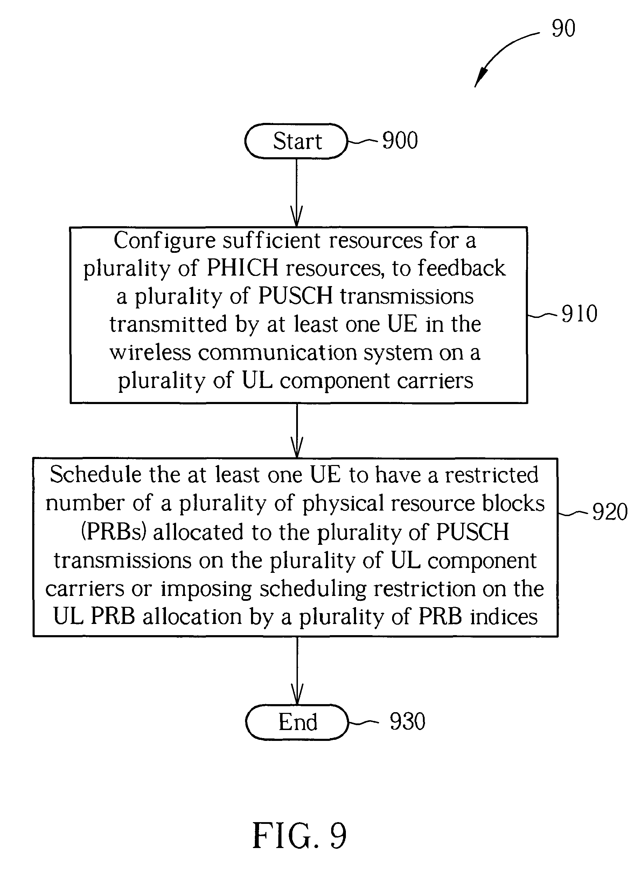

Please refer to Fig. 9, which is a flowchart of a process 90 according to an example of the present disclosure. The process 90 is utilized in a network of the wireless communication system 10 shown in Fig. 1, to handle PHICH resource collision in a dynamic UL scheduling. The process 90 may be compiled into the program code 214 and includes the following steps:

Step 900: Start.

Step 910: Configure sufficient resources for a plurality of PHICH resources, to feedback a plurality of PUSCH transmissions transmitted by at least one UE in the wireless communication system on a plurality of UL component carriers.

Step 920: Schedule the at least one UE to have a restricted number of a plurality of physical resource blocks (PRBs) allocated to the plurality of PUSCH transmissions on the plurality of UL component carriers or imposing scheduling restriction on the UL PRB allocation by a plurality of PRB indices.

Step 930: End.

According to the process 90, for avoiding the PHICH resource collision (e.g. a same PHICH group on the same DL component carrier and the same PHICH sequence) in the dynamic UL scheduling, the network configures the sufficient resources (e.g. bandwidth or sequence) for the plurality of PHICH resources (e.g. PHICH group or PHICH sequence), to feedback the plurality of PUSCH transmissions transmitted by the at least one UE in the wireless communication system on the plurality of UL component carriers, and/or schedules the at least one UE to have the restricted number of the plurality of physical resource blocks (PRBs) allocated to the plurality of PUSCH transmissions on the plurality of UL component carriers or imposing the scheduling restriction on the UL PRB allocation by the plurality of PRB indices (e.g. staggered PRB allocation for UL scheduling results in staggered PHICH resources).

Further, the network may transmit a plurality of PDCCHs on a DL component carrier, to schedule the plurality of PUSCH transmissions on the plurality of UL component carriers. In this situation, the sufficient resources may comprise the DL component carrier, and a bandwidth of the DL component carrier is equal to or larger than a sum of bandwidths of the plurality of UL component carriers for the plurality of PUSCH transmissions. Alternatively, the sufficient resources may comprise a plurality of distinct PHICH resources on the DL component carrier, and a number of the plurality of PHICH distinct resources is equal to or larger than a sum of a number of a plurality of PRB indices related to the plurality of PUSCH transmissions on the plurality of UL component carriers.

On the other hand, the network may also transmit a plurality of PDCCHs on a plurality of DL component carriers, to schedule the plurality of UL component carriers. In this situation, the sufficient resources may comprise the plurality of DL component carriers, and a bandwidth of the plurality of DL component carrier is equal to or larger than a sum of bandwidths of the plurality of UL component carriers for the plurality of PUSCH transmissions. Alternatively, the sufficient resources may comprise a first plurality of distinct PHICH resources on the plurality of DL component carriers, and a number of the first plurality of PHICH distinct resources is equal to or larger than a sum of a number of a plurality of PRB indices related to the plurality of PUSCH transmissions on the plurality of UL component carriers. More specifically, a number of a second plurality of PHICH distinct resources on each of the plurality of DL component carriers is equal to or larger than a number of a plurality of PRB indices of each of the plurality of UL component carriers.

Besides, the plurality of PRB indices (e.g. PRB index) for determination of PHICH resources (e.g. PHICH group and PHICH sequence) are independent or cyclic across the plurality of UL component carriers. A PRB index of the plurality of PRB indices and an offset are used for UL resource indexing for determination of PHICH resource. The plurality of PRB indices are serially numbered for UL resource indexing for determination of PHICH resource across the plurality of UL component carriers.

Therefore, according to the above illustration and the process 90, the network can avoid the PHICH resource collision in the dynamic UL scheduling by configuring the sufficient resources for the plurality of PHICH resources, to feedback the plurality of PUSCH transmissions transmitted by the at least one UE on the plurality of UL component carriers, and/or scheduling the UE to have the restricted number of the plurality of PRBs allocated to the plurality of PUSCH transmissions on the plurality of UL component carriers or imposing scheduling restriction on the UL PRB allocation by the plurality of PRB indices (e.g. staggered PRB allocation for UL scheduling results in staggered PHICH resources).

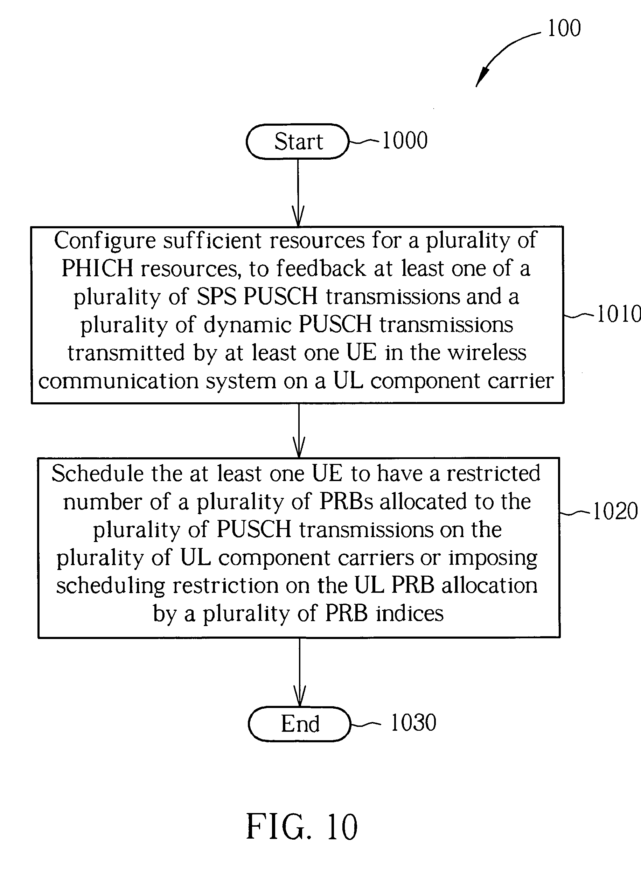

Please refer to Fig. 10, which is a flowchart of a process 100 according to an example of the present disclosure. The process 100 is utilized in a network of the wireless communication system 10 shown in Fig. 1, to handle PHICH resource collision in a semi-persistent scheduling (SPS). The process 100 may be compiled into the program code 214 and includes the following steps:

Step 1000: Start.

Step 1010: Configure sufficient resources for a plurality of PHICH resources, to feedback at least one of a plurality of SPS PUSCH transmissions and a plurality of dynamic PUSCH transmissions transmitted by at least one UE in the wireless communication system on a UL component carrier.

Step 1020: Schedule the at least one UE to have a restricted number of a plurality of PRBs allocated to the plurality of PUSCH transmissions on the plurality of UL component carriers or imposing scheduling restriction on the UL PRB allocation by a plurality of PRB indices.

Step 1030: End.

According to the process 100, for avoiding the PHICH resource collision (e.g. same PHICH group on the same DL component carrier and the same PHICH sequence) in the SPS, the network configures the sufficient resources (e.g. bandwidth or sequence) for the plurality of PHICH resources (e.g. PHICH group or PHICH sequence), to feedback at least one of the plurality of SPS PUSCH transmissions and the plurality of dynamic PUSCH transmissions transmitted by the at least one UE in the wireless communication system on the UL component carrier, and/or schedules the at least one UE to have the restricted number of the plurality of PRBs allocated to the plurality of PUSCH transmissions on the plurality of UL component carriers or imposing the scheduling restriction on the UL PRB allocation by the plurality of PRB indices.

Further, the network may transmit a plurality of PDCCHs on a DL component carrier, to schedule PUSCH transmissions on the UL component carrier. In this situation, the sufficient resources may comprise the DL component carrier, and a bandwidth of the DL component carrier is equal to or larger than a bandwidth of the UL component carrier for at least one of the plurality of SPS PUSCH transmissions and the plurality of dynamic PUSCH transmissions. Alternatively, the sufficient resources may comprise a plurality of distinct PHICH resources on the DL component carrier, and a number of the plurality of PHICH distinct resources is equal to or larger than a number of a plurality of PRB indices of the UL component carrier. Besides, a PRB index and an offset are used for UL resource indexing for determination of PHICH resource.

Therefore, according to the above illustration and the process 100, the network can avoid the PHICH resource collision in the SPS by configuring the sufficient resources for the plurality of PHICH resources, to feedback at least one of the plurality of SPS PUSCH transmissions and the plurality of dynamic PUSCH transmissions transmitted by the at least one UE on the UL component carrier, and/or scheduling the at least one UE to have the restricted number of the plurality of PRBs allocated to the plurality of PUSCH transmissions on the plurality of UL component carriers or imposing the scheduling restriction on the UL PRB allocation by the plurality of PRB indices.

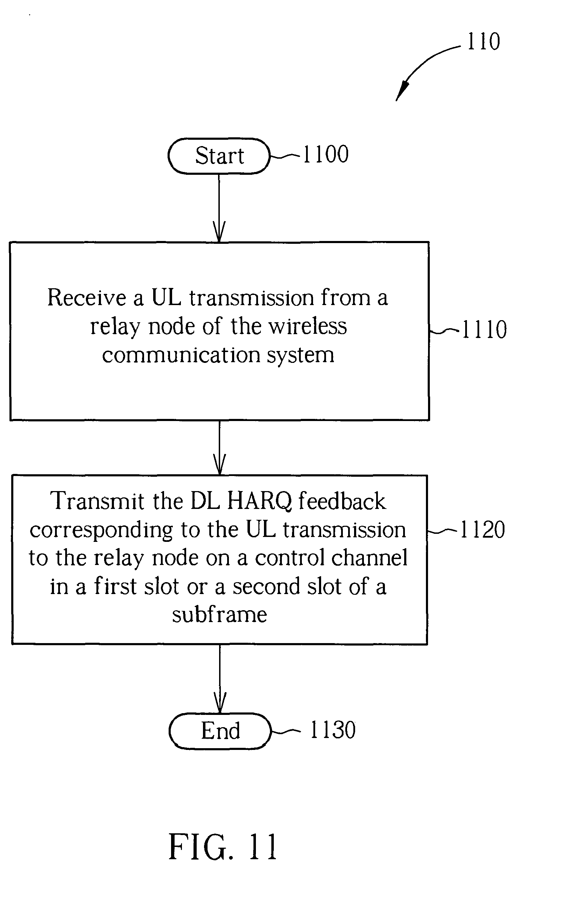

Please refer to Fig. 11, which is a flowchart of a process 110 according to an example of the present disclosure. The process 110 is utilized in a network of the wireless communication system 10 shown in Fig. 1, to handle a DL HARQ feedback. The process 110 may be compiled into the program code 214 and includes the following steps:

Step 1100: Start.

Step 1110: Receive a UL transmission from a relay node of the wireless communication system.

Step 1120: Transmit the DL HARQ feedback corresponding to the UL transmission to the relay node on a control channel in a first slot or a second slot of a subframe.

Step 1130: End.

According to the process 110, after receiving the UL transmission from the relay node of the wireless communication system, the network transmits the DL HARQ feedback corresponding to the UL transmission to the relay node on the control channel in the first slot or the second slot of the subframe. The control channel may overlap with a DL physical shared channel (e.g. R-PDSCH).

Further, the network can transmit the DL HARQ feedback corresponding to the UL transmission to the relay node on the control channel in the second slot of the subframe, if the UL transmission is scheduled in a UL grant on the control channel in the second slot. In this situation, the relay expects the DL HARQ feedback on the control channel in the second slot.

Therefore, according to the above illustration and the process 110, the network can handle the DL HARQ feedback by transmitting the DL HARQ feedback corresponding to the UL transmission to the relay node on the control channel in the first slot or the second slot of the subframe, after receiving the UL transmission from the relay node of the wireless communication system.

Please note that, the abovementioned steps of the processes including suggested steps can be realized by means that could be a hardware, a firmware known as a combination of a hardware device and computer instructions and data that reside as read-only software on the hardware device, or an electronic system. Examples of hardware can include analog, digital and mixed circuits known as microcircuit, microchip, or silicon chip. Examples of the electronic system can include a system on chip (SOC), system in package (SiP), a computer on module (COM), and the communication device 20.

In conclusion, the present invention solves the problem that PCFICHs transmitted by different cells interfere with each other, and improves reception of the CFI at a UE. Besides, the present invention also solves the problem that collision of multiple PHICHS corresponding to multiple PUSCHs caused by that PHICH resource allocated in the LTE system is not sufficient to accommodate the multiple PHICHS.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A method of acquiring control format indicator CFI information on a physical control format indicator channel PCFICH transmitted by a network of a wireless communication system for a mobile device, configured with a carrier aggregation configuration, in the wireless communication system, the method **characterized by** comprising:
locating the PCFICH of a downlink DL component carrier of a cell in the wireless communication system according to at least one of a cell-specific frequency offset, a mobile device-specific offset, a component carrier-specific offset and an additional cell-specific offset (410).

2. The method of claim 1, wherein the mobile device-specific offset is configured by a network element of the cell by using a radio resource control RRC signaling or by using a dynamic signaling; or the mobile device-specific offset is one of a plurality of offsets configured by the network of the wireless communication system to the mobile device, and/or
wherein preferably the mobile device-specific offset is a bandwidth offset, a hopping offset, a frequency carrier offset or an antenna port offset, and the additional cell-specific offset is a bandwidth offset, a hopping offset or a frequency carrier offset, and/or
the method preferably further comprising:
decoding or descrambling the PCFICH according to at least one of a cell-specific sequence and a component carrier-specific sequence, to acquire the CFI information, after locating the PCFICH of the DL component carrier.

3. A method of determining a control format indicator CFI value for a mobile device in a wireless communication system, the method **characterized by** comprising:
determining the CFI value of at least one subframe of a cross-scheduled component carrier according to CFI information indicated by at least one of a dynamic signaling received on a scheduling component carrier and a semi-static configuration, wherein the dynamic signaling and the semi-static configuration are transmitted by a network of the wireless communication system and cross-scheduled component carrier and the scheduling component carrier are configured by the network by using a carrier aggregation configuration (510).

4. The method of claim 3 further comprising:
determining the CFI value of the at least one subframe of the cross-scheduled component carrier, for determining a number of orthogonal frequency-division multiplexing OFDM symbols of a control region of the at least one subframe to receive control information, or for determining a starting position of a physical downlink shared channel PDSCH to receive DL data, and/or wherein preferably the CFI value of the at least one subframe of the cross-scheduled component carrier provided by the semi-static configuration is semi-static, and the CFI value is obtained through a radio resource control RRC signaling from the network of the wireless communication system.

5. The method of claim 3, wherein the CFI value of the at least one subframe of the cross-scheduled component carrier provided by the dynamic signaling is dynamic, and the CFI value is obtained according to at least one of a physical control format indicator channel PCFICH of the scheduling component carrier and the CFI information indicated in a physical downlink control channel PDCCH of the scheduling component carrier,
wherein preferably the CFI value is carried by the PCFICH of the scheduling component carrier, or by the PDCCH of the scheduling component carrier which schedules the at least one subframe of the cross-scheduled component carrier,
wherein preferably the PCFICH corresponds to the PDCCH, and a carrier indication field CIF carried in the PDCCH corresponds to the cross-scheduled component carrier.

6. The method of claim 3 further comprising:
determining the CFI value of the at least one subframe of the cross-scheduled component carrier for at least one of a DL detection and a DL reception according to the semi-static configuration, if the mobile device does not receive the CFI information from the dynamic signaling; or
determining the CFI value of the at least one subframe of the cross-scheduled component carrier for at least one of a DL detection and a DL reception according to the dynamic signaling, if the mobile device receives the CFI information from the dynamic signaling.

7. A method of indicating a semi-static control format indicator CFI value to a mobile device in a wireless communication system for a network of the wireless communication system, the method comprising:
configuring a cross-scheduled component carrier to the mobile device in the wireless communication system by using a carrier aggregation configuration (610);
**characterized by** sending a semi-static configuration to the mobile device to indicate the semi-static CFI value for both at least one normal subframe and at least one multimedia broadcast single frequency network MBSFN subframe of the cross-scheduled component carrier (620).

8. A method of indicating a semi-static control format indicator CFI value and a dynamic CFI value to a mobile device in a wireless communication for a network of the wireless communication system, the method comprising:
configuring a cross-scheduled component carrier to the mobile device in the wireless communication system by using a carrier aggregation configuration (710);
**characterized by** sending a radio resource control RRC signaling to the mobile device to indicate the semi-static CFI value for at least one normal subframe of the cross-scheduled component carrier (720); and
sending a dynamic signaling to the mobile device to indicate the dynamic CFI value for at least one of the at least one normal subframe and at least one multimedia broadcast single frequency network MBSFN subframe of the cross-scheduled component carrier (730).

9. A method of indicating a carrier indication field CIF configuration to a mobile device in a wireless communication for a network of the wireless communication system, the method **characterized by** comprising:
indicating the CIF configuration to the mobile device by transmitting a CIF configuration message, a CIF reconfiguration message, a CIF change signaling or a paging signaling to the mobile device (810).

10. The method of claim 9 further comprising:
indicating the CIF configuration to the mobile device by transmitting the CIF configuration message, the CIF reconfiguration message, the CIF change signaling or the paging signaling to the mobile device, upon or after updating system information of the mobile device, and/or
wherein preferably the mobile device receives a CIF reconfiguration, upon or after the system information of the mobile device is updated by the network, and the mobile device deactivates the CIF configuration and monitors an uplink primary component carrier and a downlink primary component carrier.

11. A method of handling physical hybrid automatic repeat request HARQ indicator channel PHICH resource collision in a dynamic uplink UL scheduling for a network of a wireless communication system, the method **characterized by** comprising at least one of:
configuring sufficient resources for a plurality of PHICH resources, to feedback a plurality of physical UL shared channel PUSCH transmissions transmitted by at least one mobile device in the wireless communication system on a plurality of UL component carriers (910); and
scheduling the at least one mobile device to have a restricted number of a plurality of physical resource blocks PRBs allocated to the plurality of PUSCH transmissions on the plurality of UL component carriers or imposing scheduling restriction on the UL PRB allocation by a plurality of PRB indices (920).

12. The method of claim 11 further comprising:
transmitting a plurality of physical downlink channels PDCCHs on a DL component carrier, to schedule the plurality of PUSCH transmissions on the plurality of UL component carriers,
wherein preferably the sufficient resources comprise the downlink DL component carrier, and a bandwidth of the DL component carrier is equal to or larger than a sum of bandwidths of the plurality of UL component carriers for the plurality of PUSCH transmissions, and/or
wherein preferably the sufficient resources comprise a plurality of distinct PHICH resources on the DL component carrier, and a number of the plurality of PHICH distinct resources is equal to or larger than a sum of a number of a plurality of PRB indices related to the plurality of PUSCH transmissions on the plurality of UL component carriers.

13. The method of claim 11 further comprising:
transmitting a plurality of PDCCHs on a plurality of DL component carriers, to schedule the plurality of UL component carriers,
wherein preferably the sufficient resources comprise the plurality of DL component carriers, and a bandwidth of the plurality of DL component carrier is equal to or larger than a sum of bandwidths of the plurality of UL component carriers for the plurality of PUSCH transmissions, or
wherein the sufficient resources comprise a first plurality of distinct PHICH resources on the plurality of DL component carriers,
and a number of the first plurality of PHICH distinct resources is equal to or larger than a sum of a number of a plurality of PRB indices related to the plurality of PUSCH transmissions on the plurality of UL component carriers,
wherein preferably a number of a second plurality of PHICH distinct resources on each of the plurality of DL component carriers is equal to or larger than a number of a plurality of PRB indices of each of the plurality of UL component carriers.

14. The method of claim 11, wherein the plurality of PRB indices for determination of PHICH resources are independent or cyclic across the plurality of UL component carriers, or
wherein a PRB index of the plurality of PRB indices and an offset are used for UL resource indexing for determination of PHICH resource, or
wherein the plurality of PRB indices are serially numbered for UL resource indexing for determination of PHICH resource across the plurality of UL component carriers.

15. A method of handling physical hybrid automatic repeat request HARQ indicator channel PHICH resource collision in a semi-persistent scheduling SPS for a network of a wireless communication system, the method **characterized by** comprising at least one of:
configuring sufficient resources for a plurality of PHICH resources, to feedback at least one of a plurality of SPS physical uplink shared channel PUSCH transmissions and a plurality of dynamic PUSCH transmissions transmitted by at least one mobile device in the wireless communication system on a UL component carrier (1010); and
scheduling the at least one mobile device to have a restricted number of a plurality of physical resource blocks PRBs allocated to the plurality of PUSCH transmissions on the plurality of UL component carriers or imposing scheduling restriction on the UL PRB allocation by a plurality of PRB indices (1020).

16. The method of claim 15 further comprising:
transmitting a plurality of physical downlink channels PDCCHs on a DL component carrier, to schedule PUSCH transmissions on the UL component carrier,
wherein preferably the sufficient resources comprise the DL component carrier, and a bandwidth of the DL component carrier is equal to or larger than a bandwidth of the UL component carrier for at least one of the plurality of SPS PUSCH transmissions and the plurality of dynamic PUSCH transmissions, or
wherein the sufficient resources comprise a plurality of distinct PHICH resources on the DL component carrier, and a number of the plurality of PHICH distinct resources is equal to or larger than a number of a plurality of PRB indices of the UL component carrier, and/or
wherein preferably a PRB index and an offset are used for UL resource indexing for determination of PHICH resource.

17. A method of handling a downlink DL hybrid automatic repeat request HARQ feedback for a network of a wireless communication system, the method comprising:
receiving a UL transmission from a relay node of the wireless communication system (1110); and
**characterized by** transmitting the DL HARQ feedback corresponding to the UL transmission to the relay node on a control channel in a first slot or a second slot of a subframe (1120).

18. The method of claim 17, wherein the control channel overlaps with a DL physical shared channel, and/or
wherein preferably transmitting the DL HARQ feedback corresponding to the UL transmission to the relay node on the control channel in the first slot or the second slot of the subframe comprises:
transmitting the DL HARQ feedback corresponding to the UL transmission to the relay node on the control channel in the second slot of the subframe, if the UL transmission is scheduled in a UL grant on the control channel in the second slot,
wherein preferably the relay expects the DL HARQ feedback on the control channel in the second slot.
